# EUROPEAN PATENT APPLICATION

(11) **EP 1 946 654 A1**
(43) Date of publication of application: **23.07.2008**
(21) Application number: 06798362.7
(22) Date of filing: 27.09.2006
(51) Int. Cl.: A23L 1/212, A23B 7/00, A23L 2/02, C12G 1/00, C12G 3/04, A23L 1/305

(54) **PROCESS FOR PRODUCING FRUIT WITH ENHANCED -AMINOBUTYRIC ACID CONTENT**

(30) Priority: 28.09.2005 JP 2005282354; 28.03.2006 JP 2006087787
(71) Applicant: MERCIAN CORPORATION, Chuo-ku, Tokyo 104-8305 (JP)
(72) Inventor: TAMURA, Takayuki, Kanagawa 2530012 (JP); YAMAZAKI, Tetsuhiro, Kanagawa 2530021 (JP); SUZUKI, Yumiko, Kanagawa 2510011 (JP); TAKASE, Hideki, Kanagawa 2100802 (JP); OHKUBO, Toshiyuki, Kanagawa2540903 (JP); KONNO, Tomonori, Kanagawa2410835 (JP)
(74) Representative: Patentanwälte Ruff, Wilhelm, Beier, Dauster & Partner
(86) International application number: PCT/JP2006/319154
(87) International publication number: WO 2007/037262

(57) **Abstract**

The object of the present invention is to provide a method for manufacturing effectively fruit , fruit juice and alcoholic beverage containing a higher concentration of gamma-aminobutyric acid by a relatively simple operation. A fruit of increased gamma-aminobutyric acid content is manufactured by conducting once, or repeatedly conducting two or more times, an operation comprising anaerobic processing followed by aerobic processing of starting material fruit; and further anaerobically processing said fruit to obtain fruit of greater gamma-aminobutyric acid content than the starting material fruit. A fruit juice and an alcoholic beverage are manufactured with the fruit of increased gamma-aminobutyric acid content.

## Description

### [Technical Background]

The present invention relates to a method for manufacturing fruit of increased gamma-aminobutyric acid ("GABA" hereinafter) content.

### [Background Art]

GABA, an amino acid, is widely distributed in the natural world, both in animals and plants. In animals, it is found in large quantity in brain tissue, and in higher plants, it is found in large quantity in the pollen of plants of the family *Liliaceae,* as well as in pumpkins, cucumbers, carrots, Chinese radishes (daikon), tomatoes and the like. The main physiological activity in mammals is said to include a role as a neural transmitter in the brain, hypotensive activity, neuroleptic activity, kidney function-enhancing activity, liver function-enhancing activity, and obesity-suppressing activity (see Non-patent Reference 1, for example).

Accordingly, the intake of GABA as a foodstuff is expected to afford improvement in hypertension. Thus, a number of foods the GABA content of which has been increased by suitable processing have been proposed. Known examples are GABA-enriched rice germ (Oryza Oil & Fat Chemical Co., Ltd.) (a food in which the GABA content is increased by 0.3 percent by anaerobically processing rice germ) and Gabaron tea (numerous companies) (tea in which anaerobically processing of the tea leaves increases the GABA content several ten-fold relative to the level prior to processing).

There is a method of manufacturing GABA-enriched foods using microorganisms by adding glutamic acid (glutamate) to microorganisms having glutamate decarboxylase and culturing to obtain fermented foods containing GABA (see Patent Reference 1, for example). Additionally, there is a method of manufacturing GABA-enriched foods using plants, in the form of a GABA-enrichment method, in which glutamic acid (glutamate) is added to plants having glutamate decarboxylase to produce GABA (see Patent References 2 and 3, for example).

However, although the foods and food materials obtained by these methods contain high concentrations of GABA, they are obtained by adding glutamic acid that was not originally present in the original food starting materials. Thus, they are somewhat wanting from the perspective of the trend toward foods containing natural substances and in terms of balancing the original flavor, aroma, and the like of foods.

There are also methods of manufacturing GABA-containing foods and drinks by culturing microorganisms having the ability to produce protease and microorganisms having the ability to produce glutamate decarboxylase in food materials containing peptides or proteins that contain glutamic acid as a constituent amino acid (see Patent Reference 4, for example).

There is also a method of manufacturing wine employing anaerobically processed grapes as starting material by culturing variants of the yeast employed to manufacture alcohol having mutations in genes contributing to the uptake of amino acids (see Patent Reference 5 and Non-patent Reference 2, for example). However, the GABA content that can be achieved by methods in which simple anaerobic processing is conducted depends on the content of GABA and glutamic acid in the starting material juice.

There is also a method that is unaffected by the glutamic acid content of the starting material by which anaerobic processing and aerobic processing are repeatedly alternated to greatly increase the GABA content in tea leaves (see Patent Reference 6, for example). However, there is no example of this method ever having been applied to fruit. There has been no observation of either an increase or decrease in GABA, or of an increase in glutamic acid, when fruit has been aerobically processed without having been first anaerobically processed (see Patent Reference 5, for example). Additionally, it has been reported that when grapes are anaerobically processed with carbon dioxide and then placed under aerobic conditions for 24 hours, a one-time increase in GABA resulting from the anaerobic processing ends up decreasing to the original level following aerobic processing (see Non-patent Reference 3, for example).

[Patent Reference 1] Japanese Unexamined Patent Publication (KOKAI) Heisei No. 7-227245 (page 2, claim 2)
[Patent Reference 2] Japanese Unexamined Patent Publication (KOKAI) No. 2004-24229 (page 2, claim 1)
[Patent Reference 3] Japanese. Unexamined Patent Publication (KOKAI) No. 2001-252091 (page 2, claim 1)
[Patent Reference 4] Japanese Unexamined Patent Publication (KOKAI) No. 2000-14356 (page 2, claim 1, and page 6, Fig. 2)
[Patent Reference 5] Japanese Unexamined Patent Publication (KOKAI) No. 2001-321159 (page 8, Table 5), (page 10, Fig. 2)
[Patent Reference 6] Japanese Unexamined Patent Publication (KOKAI) Heisei No. 11-127781 (claim 1 and page 7, Fig. 5).

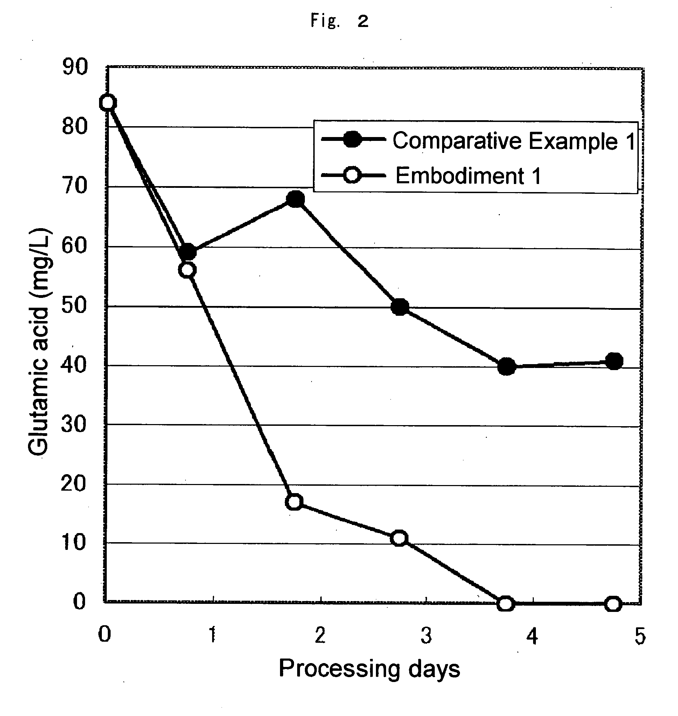

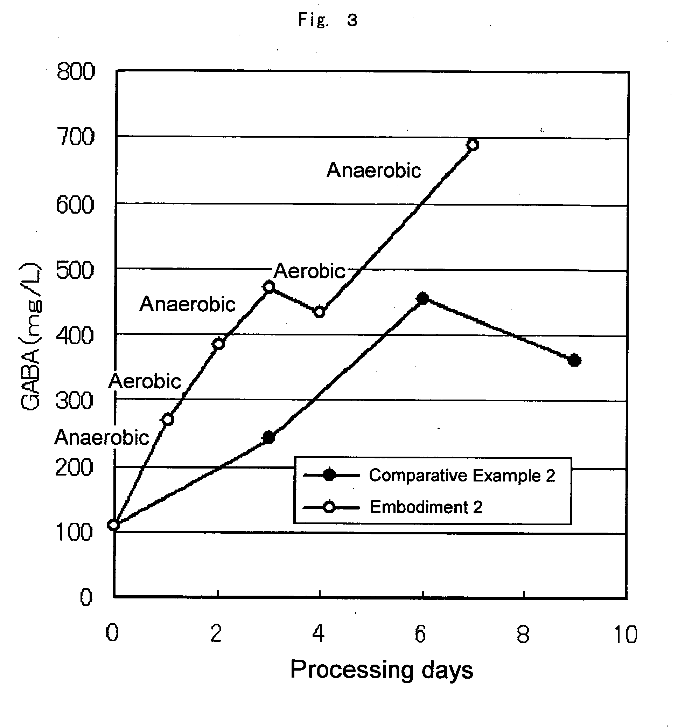

[Non-patent Reference 1] The physiological functions of GABA, Masayoshi Uzawa, Food Style 21, Food Chemistry News Agency, 2005, May Issue, p. 56.
[Non-patent Reference 2] Kishimoto et al., Jokyo 98,10, 737-742 (2003) (p. 738).
[Non-patent Reference 3] C. Tesniere, C. Romieu, I. Duelay, M.Z. Nicol, C. Flanzy and J. P. Robin, J. Exp. Bot., 45, 145-151 (1994) (p. 146, Fig. 2 and p. 147, Fig. 3).

The object of the present invention is to provide a method for manufacturing fruit containing a higher concentration of GABA than starting material fruit by a relatively simple operation without adding external glutamic acid or the like.

The present inventors conducted extensive research into methods of increasing the GABA content of fruit, resulting in the discovery that while in simple anaerobic processing, the GABA content in processed fruit was affected by the GABA content and glutamic acid content in the starting material fruit, when anaerobic processing and aerobic processing were repeated in alternating fashion and a final round of anaerobic processing was conducted, it was possible to manufacture fruit having a greatly increased GABA content relative to that of the starting material fruit irrespective of the GABA content and glutamic acid content of the starting material fruit. Based on the above discovery, the present invention has been accomplished.

### [Disclosure of the Invention]

That is, the present invention relates to:
(1) A method for manufacturing fruit of increased gamma-aminobutyric acid content, characterized by:
   conducting once, or repeatedly conducting two or more times, an operation comprising anaerobic processing followed by aerobic processing of starting material fruit; and
   further anaerobically processing said fruit to obtain fruit of greater *gamma-*aminobutyric acid content than the starting material fruit;
(2) The method for manufacturing in accordance with (1), wherein said operation comprising anaerobic processing followed by aerobic processing is conducted from 2 to 5 times;
(3) The method for manufacturing in accordance with (1) or (2) wherein the anaerobic processing period is from 0.2 hours to 9 days;
(4) The method for manufacturing in accordance with (1) or (2) wherein the aerobic processing period is from 0.2 hours to 1 day;
(5) A method for manufacturing fruit juice of increased gamma-aminobutyric acid content, characterized by:
   juicing fruit of increased gamma-aminobutyric acid content obtained by the method for manufacturing in accordance with any one of (1) to (4);
(6) A method for manufacturing fruit juice of increased gamma-aminobutyric acid content, characterized by concentrating fruit juice obtained by the method for manufacturing in accordance with (5);
(7) A method for manufacturing an alcoholic beverage, characterized by pickling fruit of increased gamma-aminobutyric acid content that has been obtained by the method for manufacturing in accordance with any one of (1) to (4) in shochu, brandy, or alcohol.
(8) A method for manufacturing an alcoholic beverage, characterized by fermenting fruit juice obtained by the method for manufacturing in accordance with (5) or (6) after diluting with water as needed; and
(9) A method for manufacturing an alcoholic beverage, characterized by blending in a fruit juice obtained by the method for manufacturing in accordance with (5) or (6).

According to the present invention, it is possible to efficiently obtain fruit of increased GABA content and of good aroma without affecting the content of GABA or glutamic acid in the starting material employed and without adding separately manufactured glutamic acid. Further, according to the present invention, it is possible to obtain fruit juice and alcoholic beverages of increased GABA content using this fruit of increased GABA content.

### [Best Mode of Implementing the Invention]

A desirable mode of implementing the present invention will be described.

In the present invention, the term "anaerobically processing" means placing a starting material in the form of fruit under anaerobic conditions for a prescribed period. More particularly, it means packing fruit into a tightly sealed container and generating conditions approximating a vacuum by means of suction generated by a pump or the like, or feeding in an inert gas such as nitrogen orcarbon dioxide, with or without a tight seal, to maintain an inert gas atmosphere for a prescribed period. The processing period is from 0.2 hours, desirably from 0.5 hours, to 9 days. When conducting anaerobic processing and aerobic processing in frequently repeating fashion, a relatively short period suffices. Such processing results in the glutamic acid in the fruit being converted to GABA by glutamate decarboxylase. Even with extended processing in which the processing period exceeds the upper limit, results corresponding to elimination of the precursor glutamic acid are not obtained. Processing may be conducted at a temperature of from 5 to 35°C, desirably from 20 to 27°C. When the processing temperature is low, it becomes necessary to extend the processing period.

"Aerobic processing" means placing the fruit in an aerobic state. More particularly, it means anaerobically processing as set forth above fruit that has been packed into a container and then feeding in air or oxygen to switch to aerobic conditions, or opening the container to place the fruit in contact with outside air. Aerobic processing causes a portion of the GABA to revert to glutamic acid and generates glutamic acid from components other than the GABA in the fruit, thereby increasing the accumulated level of glutamic acid. Normally, it suffices to conduct aerobic processing for from 0.2 hours, desirably from 0.5 hours, to one day. When insufficient aerobic processing is conducted, the accumulated level of glutamic acid is inadequate, and the quantity of GABA generated in subsequent anaerobic processing is inadequate. Further, extended aerobic processing exceeding the upper limit is undesirable because an excessive reduction in GABA takes place. Still further, it normally suffices to conduct processing at a temperature identical to that of the immediately preceding anaerobic processing.

In the present invention, after repeatedly conducting an operation comprised of one cycle of the above-described anaerobic processing and aerobic processing, anaerobic processing is finally conducted one last time. The number of cycles is desirably one to five. When five cycles are exceeded, there is sometimes no observable increase in GABA. The final anaerobic processing is conducted in the same manner as the preceding anaerobic processing. The method of the present invention permits the manufacturing of fruit having a GABA content that is increased to a far greater degree than by the conventional method of conducting just anaerobic processing.

Fruit suitable for use as starting material in the present invention is not specifically limited. Examples are plums, applies, peaches, cherries, and the like of the family Rosaceae; grapes and the like of the family *Vitaceae*; Satsuma oranges, grapefruit, lemons, citron, and the like of the family *Rutaceae*; and blueberries and the like of the family *Ericaceae*.

By juicing fruit, obtained by the method for manufacturing of the present invention, that has a greater gamma-aminobutyric acid content than the starting material, it is possible to manufacture fruit juice of high GABA content. The method of manufacturing this fruit juice is not specifically limited, other than that the fruit employed be fruit of heightened gamma-aminobutyric acid content relative to the starting material fruit; it suffices to apply known conditions such as juicing conditions, clarifying conditions, and sterilization conditions. Concentrating this fruit juice permits the manufacturing of concentrated fruit juice of high GABA content. The concentration conditions and the like are not specifically limited in the method of manufacturing this concentrated fruit juice.

The high GABA-content fruit juice and concentrated fruit juice obtained by the methods for manufacturing of the present invention can be adjusted to optimal concentration for fermentation and brewing methods identical to those commonly employed in the manufacturing of fruit-based alcoholic beveragesthat is, adding seed yeast, obtaining a stock wine in a single fermentation, and clarifying by removing sediment and filtering with diatomaceous earth or the like - - can be employed to manufacture fruit wine of high GABA content. In the manufacturing of such fruit wine, the fermentation conditions and clarification conditions employed are not specifically limited. For example, yeast commonly employed in the brewing of fruit wines, such as *Saccharomyces cerevisiae,* can be employed in fermentation.

The high GABA-content fruit juice obtained by the method for manufacturing of the present invention can be blended into separately manufactured alcoholic beverages to manufacture high alcohol-content beverages of high GABA content. In the manufacturing of such alcoholic beverages, neither the type of alcoholic beverage serving as starting material, the clarification method, nor the like is specifically limited.

Fruit obtained by the method for manufacturing of the present invention can be steeped in alcoholic beverages such as shochu or brandy to manufacture alcoholic beverages of high GABA content. In the manufacturing of such alcoholic beverages, neither the type of alcoholic beverage in which the fruit is steeped, the steeping conditions, nor the clarifying method is specifically limited.

### [Embodiments]

The present invention is specifically described through embodiments below.

### Comparative Example 1

A starting material in the form of plums was processed as follows. Glass bottles were procured and 20 plums were charged to each bottle. The bottles were tightly sealed and stored at 4°C as controls.

### Embodiment 1

Employing the same starting material as in Comparative Example 1, the interiors of the glass bottles were backfilled with carbon dioxide and anaerobic processing was conducted for 18 hours. The covers were then removed, exposing the plums to outside air, and aerobic processing was conducted for six hours. Subsequently, the same combination of anaerobic processing and aerobic processing was repeated three more times. Finally, the same anaerobic processing was conducted for 18 hours. All processing was conducted at 25°C. During the second and subsequent anaerobic processing, sampling was conducted to obtain samples (of the plum) for analysis. Each of the samples was immediately frozen, and then thawed, crushed, and juiced immediately prior to amino acid analysis. The amino acid analysis was conducted by the post-column fluorescence detection method with a LC-10ADvp system (Shimadzu Corporation (Ltd.)).

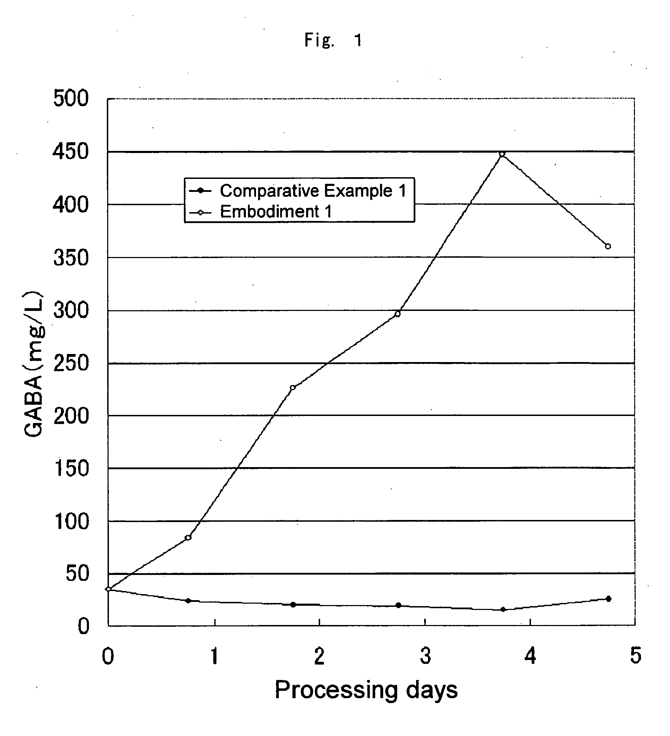

Figs. 1 and 2 show the results of Comparative Example 1 and Embodiment 1. In Comparative Example 1, no increase in GABA was observed. However, in Embodiment 1, the GABA continued to increase up to the third repetition, reaching a maximum of 14.4-fold the original level, representing a marked increase in the GABA content. In Figs. 1 and 2, the initial plots are from immediately after the initial anaerobic processing (at 18 hours). The data immediately following aerobic processing were not plotted; only data immediately following anaerobic processing were plotted.

A close look at the initial glutamic acid content and the level of GABA produced reveals that although there was 84 mg/L (0.57 mmol/L) of glutamic acid, 412 mg/L (3.99 mmol/L) of GABA was produced. Considering that an equimolar quantity of GABA is produced from glutamic acid by glutamate decarboxylase, a large quantity of GABA was produced that did not depend on the level of precursor glutamic acid.

### Comparative Example 2

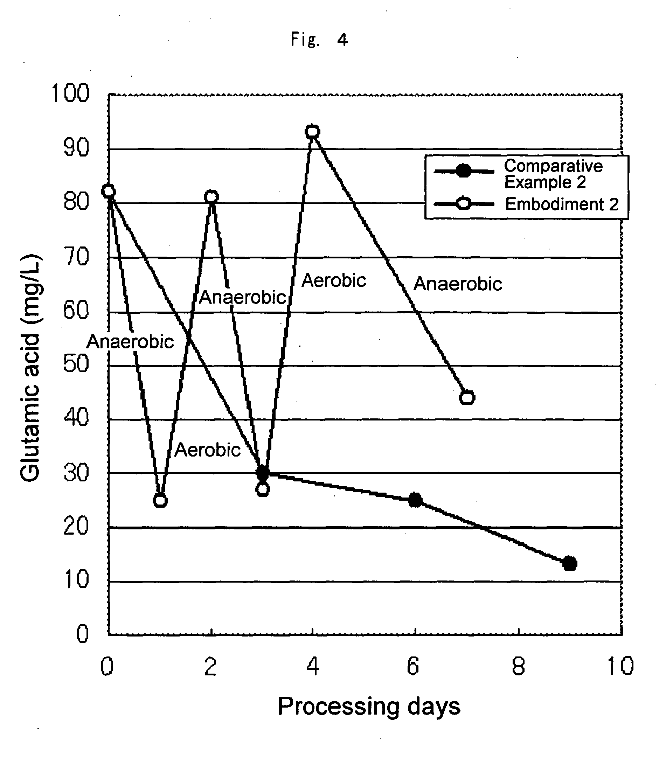

Grapes (Chardonnay variety) were processed as follows. Polyethylene bags were procured. One cluster of grapes was placed in each bag. The interiors of the bags were backfilled with carbon dioxide, the bags were sealed, and anaerobic processing was conducted. The anaerobic processing was conducted for 3 days, 6 days, and 9 days at 20°C. Grapes that had not been anaerobically processed (0 days) were employed as controls. After each processing period, samples were immediately crushed and juiced while still sealed in the bags and amino acid analysis was conducted by the method described in Embodiment 1. The results are given in Fig. 3 (-•-) and Fig. 4 (-•-).

As will be clear from Fig. 3, in the sample that was anaerobically processed by the conventional method, the quantity of GABA increased relative to the control sample through day 6, after which there was no increase. As shown in Fig. 4, the glutamic acid decreased.

### Embodiment 2

One day of anaerobic processing was conducted using the same starting material (grapes) and anaerobic processing method as in the comparative example. Subsequently, the bags were opened to expose the grapes to outside air and one day of aerobic processing was conducted. Subsequently, anaerobic processing was again conducted under the same conditions for one day, after which aerobic processing was conducted for one day. Finally, the same method was employed to conduct anaerobic processing for three days. All processing was conducted at 20°C. After each round of processing, the samples were immediately crushed and juiced and amino acid analysis was conducted by the method described in Embodiment 1. The results are given in Fig. 3 (-O-) and Fig. 4 (-○-).

In Comparative Example 2, the GABA increased through day 6, after which no additional increase was observed. In Embodiment 2, the GABA continued to increase through day 7, finally reaching a GABA level of 6.2-fold that of the control and 1.8-fold that of Comparative Example 2.

As will be clear from Fig. 4, in contrast to Comparative Example 2, in which the glutamic acid continuously decreased, in Embodiment 2, the conducting of aerobic processing following anaerobic processing caused the glutamic acid to increase and a return to the original level was observed. Further, a close look at the amount of GABA produced and the initial glutamic acid content reveals that while there was 82 mg/L (0.56 mmol/L) of glutamic acid, 579 mg/L (5.61 mmol/L) of GABA was produced. Considering that an equimolar quantity of GABA is produced from glutamic acid by glutamate decarboxylase, a large quantity of GABA was produced that did not depend on the level of precursor glutamic acid.

### Embodiment 3

Plums were processed as follows. Polyethylene bags were procured and one kilogram of plums was charged to each bag. The interiors of the bags were backfilled with carbon dioxide, the bags were sealed, and anaerobic processing was conducted for 18 hours. Subsequently, the bags were opened, exposing the fruit to the outside air, and aerobic processing was conducted for six hours. Thereafter, the same combination of anaerobic and aerobic processing was conducted four times. Finally, identical anaerobic processing was conducted for 18 hours. All processing was conducted at 20°C. Immediately following the conclusion of anaerobic processing, 1.8 L of shochu and 0.5 kg of refined sugar were used to manufacture plum wine by the established method.

As a control, unprocessed plums were used to manufacture plum wine by the established method with the same quantities of shochu and refined sugar. After two months had elapsed, the manufactured plum wine and the control plum wine were subjected to amino acid analysis. The results are given in Table 1. Relative to the plum wine manufactured by the conventional method, the plum wine of Embodiment 3 that had been manufactured based on the present invention exhibited a marked increase in GABA content of 1.9-fold.

**[Table 1]**

| | GABA (mg/L) |
|---|---|
| Control | 74 |
| Embodiment 3 | 144 |

### Embodiment 4

Grapes (Chardonnay variety) were processed as follows. Polyethylene bags were procured and 300 kg of grapes were charged to each bag. The interiors of the bags were backfilled with carbon dioxide, the bags were sealed, and anaerobic processing was conducted for a period of 20 hours. Following processing, the bags were opened to expose the fruit to the outside air and four hours of aerobic processing was conducted. Subsequently, the same combination of anaerobic processing and aerobic processing was conducted two more times. Finally, the same anaerobic processing was conducted for 18 hours. All processing was conducted at 27°C. Juicing was conducted immediately upon completion of anaerobic processing and wine was obtained by brewing by the established method.

Unprocessed grapes were used to brew wine by the established method as a control. The manufactured wine and control wine were subjected to amino acid analysis. The results are given in Table 2. Relative to the wine manufactured by the conventional method, the wine of Embodiment 4 that had been manufactured based on the present invention exhibited a marked increase in GABA content of 9.1-fold.

**[Table 2]**

| | GABA (mg/L) |
|---|---|
| Control | 44 |
| Embodiment 4 | 399 |

### Embodiment 5

Plums were processed as follows. Polyethylene bags were procured and one kilogram of plums was placed in each bag. The interiors of the bags were backfilled with carbon dioxide, the bags were sealed, and anaerobic processing was conducted for 18 hours. Subsequently, the bags were opened to expose the fruit to the outside air and aerobic processing was conducted for six hours. Subsequently, the same combination of anaerobic processing and aerobic processing was repeated following the first cycle for a total of six cycles. Finally, identical anaerobic processing was conducted for 18 hours. All processing was conducted at 20°C. The fruit was frozen immediately following the conclusion of the anaerobic processing, and crushed and juiced immediately prior to amino acid analysis. Table 3 shows the results of amino acid analysis of a control that had not been subjected to anaerobic processing. The table shows that the GABA content increased 6.3-fold through processing cycle 5, but decreased in cycle 6, ending up at 6.0-fold.

**[Table 3]**

| | Control | Cycle 1 | Cycle 2 | Cycle 3 | Cycle 4 | Cycle 5 | Cycle 6 |
|---|---|---|---|---|---|---|---|
| GABA (mg/L) | 17 | 49 | 55 | 76 | 72 | 107 | 102 |

### Embodiment 6

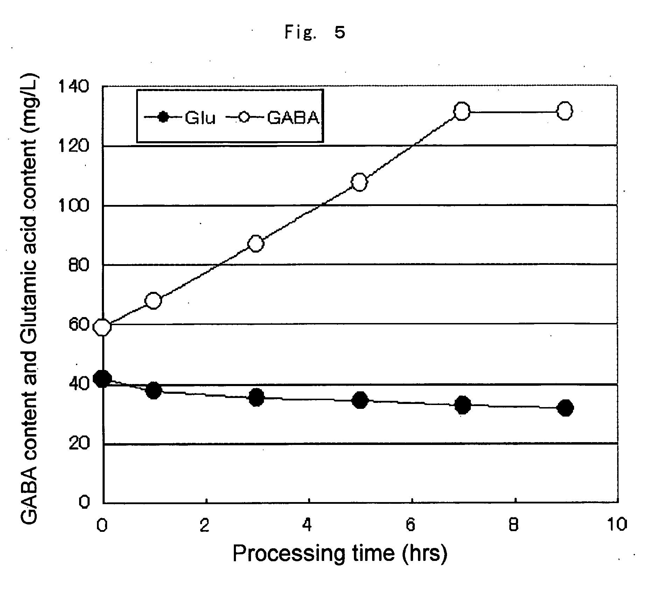

Polyethylene bags were procured, one cluster of grapes (Steuben variety) was placed in each bag, the interiors of the bags were backfilled with carbon dioxide, the bags were sealed, and anaerobic processing was conducted for one hour. Subsequently, the bags were opened to expose the fruit to the outside air and aerobic processing was conducted for one hour. Subsequently, the same combination of anaerobic processing and aerobic processing was conducted three times. Finally, the same anaerobic processing was conducted for one hour. Grapes that had not been subjected to this processing (0 hours) were employed as a control. All processing was conducted at 20°C. Immediately following anaerobic processing, the grapes were crushed and juiced, and amino acid analysis was conducted by the same method as described in Embodiment 1.
The results of the content (-O-) of gamma-aminobutyric acid and the content (-•-) of glutamic acid (Glu) are shown in Fig. 5.

In Embodiment 6, the GABA finally increased 2.2-fold relative to the control. A close look at the quantity of GABA produced and the reduction in glutamic acid reveals that for a reduction in glutamic acid of 11 mg/L (0.075 mmol/L), 72 mg/L (0.70 mmol/L) of GABA was produced. Considering that an equimolar quantity of GABA is produced from glutamic acid by glutamate decarboxylase, a large quantity of GABA was produced that did not depend on the level of precursor glutamic acid.

### Embodiment 7

Polyethylene bags were procured, 30 g of blueberries were charged to each bag, the interiors of the bags were backfilled with carbon dioxide, the bags were sealed, and anaerobic processing was conducted for 30 minutes. Subsequently, the bags were opened, the fruit was exposed to the outside air, and aerobic processing was conducted for 30 minutes. Subsequently, the same combination of anaerobic processing and aerobic processing was conducted four more times. Finally, the same anaerobic processing was conducted for one hour. Blueberries that had not been subjected to this processing (0 hours) were employed as a control. All processing was conducted at 20°C. Immediately following anaerobic processing, the blueberries were crushed and juiced, and amino acid analysis was conducted by the same method as described in Embodiment 1; the results are given in Table 4. The GABA concentration peaked at processing cycle 4. It roughly leveled off at cycle 5. However, a clear drop in GABA concentration was exhibited at cycle 6.

**[Table 4]**

| | Control | Cycle 1 | Cycle 2 | Cycle 3 | Cycle 4 | Cycle 5 | Cycle 6 |
|---|---|---|---|---|---|---|---|
| GABA (mg/L) | 17 | 41 | 59 | 46 | 71 | 62 | 47 |

### [Industrial Applicability]

The method for manufacturing fruit, the method for manufacturing juice, and the method for manufacturing alcohol beverages of the present invention are useful methods for manufacturing high GABA-content fruits, juices, and alcoholic beverages.

### [Brief Description of the Drawings]

[Fig. 1] A plot of the transition of the GABA content of plums manufactured in Comparative Example 1 and Embodiment 1.
[Fig. 2] A plot of the transition of the glutamic acid content of plums manufactured in Comparative Example 1 and Embodiment 1.
[Fig. 3] A plot of the transition of the GABA content of grapes manufactured in Comparative Example 2 and Embodiment 2.
[Fig. 4] A plot of the transition of the glutamic acid content of grapes manufactured in Comparative Example 2 and Embodiment 2.
[Fig. 5] A plot of the transition of the GABA content and glutamic acid content of grapes manufactured in Embodiment 6.

## Claims

1. A method for manufacturing fruit of increased gamma-aminobutyric acid content, **characterized by**:
conducting once, or repeatedly conducting two or more times, an operation comprising anaerobic processing followed by aerobic processing of starting material fruit; and
further anaerobically processing said fruit to obtain fruit of greater *gamma-*aminobutyric acid content than the starting material fruit.

2. The method for manufacturing in accordance with claim 1, wherein said operation comprising anaerobic processing followed by aerobic processing is conducted from 2 to 5 times.

3. The method for manufacturing in accordance with claim 1 or 2, wherein the anaerobic processing period is from 0.2 hours to 9 days.

4. The method for manufacturing in accordance with claim 1 or 2, wherein the aerobic processing period is from 0.2 hours to 1 day.

5. A method for manufacturing fruit juice of increased gamma-aminobutyric acid content, **characterized by**:
juicing fruit of increased gamma-aminobutyric acid content obtained by the method for manufacturing in accordance with any one of claims 1 to 4.

6. A method for manufacturing fruit juice of increased gamma-aminobutyric acid content, **characterized by** concentrating fruit juice obtained by the method for manufacturing in accordance with claims 5.

7. A method for manufacturing an alcoholic beverage, **characterized by** pickling fruit of increased gamma-aminobutyric acid content that has been obtained by the method for manufacturing in accordance with any one of claims 1 to 4 in shochu, brandy, or alcohol.

8. A method for manufacturing an alcoholic beverage, **characterized by** fermenting fruit juice obtained by the method for manufacturing in accordance with claim 5 or 6 after diluting with water as needed.

9. A method for manufacturing an alcoholic beverage, **characterized by** blending in a fruit juice obtained by the method for manufacturing in accordance with claim 5 or 6.
